# EUROPEAN PATENT SPECIFICATION

(11) **EP 2 329 459 B1**
(45) Date of publication and mention of the grant of the patent: **03.06.2020**
(21) Application number: 09789801.9
(22) Date of filing: 12.06.2009
(51) Int. Cl.: G07C 5/00

(54) **METHOD AND APPARATUS FOR OBTAINING VEHICLE DATA**
VERFAHREN UND VORRICHTUNG ZUM ERHALTEN VON FAHRZEUGDATEN
PROCÉDÉ ET APPAREIL PERMETTANT D'OBTENIR DES DONNÉES DE VÉHICULE

(30) Priority: 24.07.2008 US 179390
(43) Date of publication of application: 08.06.2011
(73) Proprietor: The Boeing Company, Chicago, IL 60606-1596 (US)
(72) Inventor: KINNEY, David, Scott, Everett WA 98201 (US); MILLAR, James, L., Seattle WA 98118 (US); MAGGIORE, John, B., Seattle WA 98103 (US); NEWSUM, Sean, Allen, Bellevue WA 98006 (US); RUNO, Steven, C., Bellevue WA 98006-6410 (US)
(74) Representative: Howson, Richard Giles Bentham
(86) International application number: PCT/US2009/047166
(87) International publication number: WO 2010/011437

(56) References cited:
- EP-A- 1 087 343
- US-A- 5 400 018
- US-A1- 2003 107 548
- US-A1- 2005 027 480
- US-A1- 2005 065 682
- US-A1- 2008 051 955

## Description

### BACKGROUND INFORMATION

### 1. Field:

The present disclosure relates generally to an improved data processing system and in particular to a method and apparatus for processing data. Still more particularly, the present disclosure relates to a computer implemented method, apparatus, and computer usable program code for obtaining vehicle data.

### 2. Background:

An aircraft may include one or more computers to perform various functions. These functions include, for example, environmental control systems, aircraft flight control systems, navigation systems, and health monitoring systems. A health monitoring system in an aircraft may be a computer or other device that is connected to other computers and/or sensors in the aircraft. This type of system may collect aircraft data and fault information for use in identifying when repairs or maintenance may be needed.

This type of data may be obtained after an aircraft has landed and/or during flight. Currently, an operator may select data and events that an aircraft health monitoring system may use to generate reports. In response to a particular type of event, the aircraft data processing system may store data or send the data to a ground location. In current systems the data to be downloaded is fixed by the system and does not change with the context of the situation aboard the aircraft.

### SUMMARY

In a first aspect of the invention there is provided a computer implemented method performed by a vehicle monitoring system for automatically obtaining vehicle data. wherein the vehicle is an aircraft, as defined in clam 1 of the appended claims. In a second aspect there is provided a vehicle monitoring system for automatically obtaining vehicle data wherein the vehicle is an aircraft, as defined in claim 5. In a third aspect there is provided a computer program product for automatically obtaining vehicle data as defined in claim 7. The advantageous embodiments provide a computer implemented apparatus, and computer usable program code for automatically obtaining vehicle data. In one advantageous embodiment, a computer implemented method monitors a vehicle for events over a wireless interface. In response to receiving an event sent over the wireless interface by the vehicle, a determination is made whether vehicle data is needed for the event based on a policy. A request for the vehicle data is sent over the wireless interface to the vehicle in response to a determination that vehicle data is needed. The vehicle data is stored in response to receiving the vehicle data over the wireless interface from the vehicle.

In another advantageous embodiment, a vehicle is monitored for an event. A determination is made as to whether vehicle data is needed for the event based on a policy in response to detecting the event. A request is sent to the vehicle for the vehicle data in response to a determination that the vehicle data is needed.

In yet another advantageous embodiment, an apparatus comprises a policy, a data request process, and a data processing system. The policy identifies a set of conditions of when vehicle data is needed for an event. The data request process is capable of monitoring a vehicle for events over a wireless interface. In response to receiving the event sent over the wireless interface by the vehicle, a determination is made as to whether vehicle data is needed for the event based on the policy. In response to a determination that vehicle data is needed, a request is sent for the vehicle data over the wireless interface to the vehicle. In response to receiving the vehicle data over the wireless interface from the vehicle, the vehicle data is stored. The data request process and the policy are located on the data processing system.

In still yet another advantageous embodiment, a computer program product contains a program code on a computer recordable storage medium. Program code is present for monitoring a vehicle for events over a wireless interface. Program code is also present to receive an event sent over the wireless interface by the vehicle for determining whether vehicle data is needed for the event based on a policy. Program code is present for sending a request for the vehicle data over the wireless interface to the vehicle in response to a determination that vehicle data is needed. Program code is present for storing the vehicle data in response to receiving the vehicle data over the wireless interface from the vehicle.

The features, functions, and advantages can be achieved independently in various embodiments of the present disclosure or may be combined in yet other embodiments in which further details can be seen with reference to the following description and drawings.

US 5400018 has an abstract stating "a method for reduces the amount of information relating to the status of a vehicle relayed from the vehicle to a remote location over a communications data link. The method includes the steps of generating a fault code, delivering the fault code to the remote location across the data link, and receiving the fault code at the remote location and responsively generating a data request signal. The data request signal is delivered to the vehicle over the data link, and vehicle information is generated and delivered to the remote location over the data link".

US 2008/051955 has an abstract stating "a method for conducting a vehicle-related survey that gathers information regarding a specific area of interest from a vehicle user or vehicle hardware. In general, this method utilizes vehicle data to generate a survey having a variety of questions and instructions that are generally directed towards the area of interest. The instructions can be designed to place the vehicle into a predetermined configuration in an attempt to recreate a known vehicle problem or condition. Once the survey is generated, it is wirelessly sent from a call center or other remote facility to one or more vehicles over a wireless carrier system, and is then presented to the vehicle user. The responses provided can be stored locally, sent back to the call center for further analysis, or processed in a variety of different ways to find out more information regarding the area of interest".

US 2005027480 has an abstract stating "the present invention provides a multi-level model-based intelligent agent diagnosis system and method for computer-controlled machinery operative to reduce the complexity typically associated with conventional model based diagnostic systems. The system utilizes a plurality of intelligent agents arranged in a plurality of physically hierarchical layers such that the tasks associated with accomplishing model based diagnosis are distributed amongst the intelligent agents if each layer wherein information gathered from a first lower level intelligent agents is processed by at least one other higher level to realize system fault diagnosis. The system provides increased processing speed of modeling and/or model identification such that faster and more accurate failure isolation and identification is accomplished".

EP1087343 A1 discloses a method for conducting diagnosis of a vehicle after a failure has been detected. In this method, additional data can be remotely requested in order to analysis the vehicle failure.

Aspects are set out in the independent claims, with some optional features set out in the claims dependent thereto.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof, will best be understood by reference to the following detailed description of an advantageous embodiment of the present disclosure when read in conjunction with the accompanying drawings, wherein:
**Figure 1** is a pictorial representation of a network of data processing systems in which an advantageous embodiment may be implemented;
**Figure 2** is a diagram of a data processing system in accordance with an advantageous embodiment;
**Figure 3** is a diagram illustrating components used to automatically obtain data from a vehicle in accordance with an advantageous embodiment;
**Figure 4** is a diagram illustrating data flow for requesting vehicle data in accordance with an advantageous embodiment;
**Figure 5** is an illustration of data flow for requesting vehicle data in accordance with an advantageous embodiment;
**Figure 6** is another illustration of data flow for vehicle data in accordance with an advantageous embodiment;
**Figure 7** is a flowchart of a process for obtaining vehicle data in accordance with an advantageous embodiment; and
**Figure 8** is a flowchart of a process for analyzing vehicle data in accordance with an advantageous embodiment.

### DETAILED DESCRIPTION

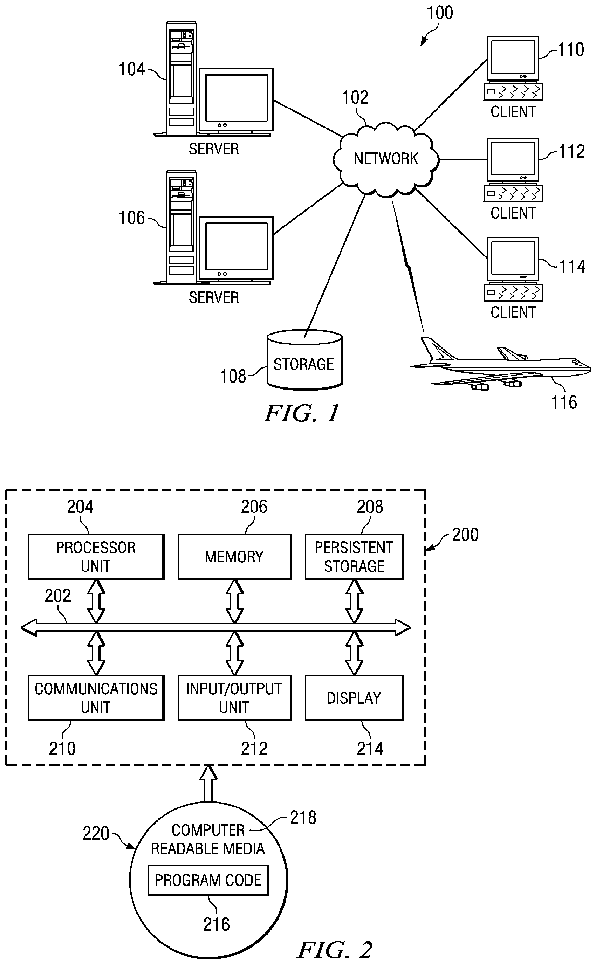

With reference now to the figures and in particular with reference to **Figures 1-2****,** exemplary diagrams of data processing environments are provided in which the advantageous embodiments of the present invention may be implemented. It should be appreciated that **Figures 1-2** are only exemplary and are not intended to assert or imply any limitation with regard to the environments in which different embodiments may be implemented. Many modifications to the depicted environments may be made.

With reference now to the figures, **Figure 1** depicts a pictorial representation of a network of data processing systems in which the advantageous embodiments of the present invention may be implemented. Network data processing system **100** is a network of computers in which embodiments may be implemented. Network data processing system **100** contains network **102,** which is the medium used to provide communications links between various devices and computers connected together within network data processing system **100.** Network **102** may include connections, such as wire, wireless communication links, or fiber optic cables.

In the depicted example, server **104** and server **106** connect to network **102** along with storage unit **108.**

In addition, clients **110, 112,** and **114** connect to network **102.** These clients **110, 112,** and **114** may be, for example, personal computers or network computers. In the depicted example, server **104** provides data, such as boot files, operating system images, and applications to clients **110, 112,** and **114.** Clients **110, 112,** and **114** are clients to server **104** in this example.

Aircraft **116** is a client that also may exchange information with clients **110, 112,** and **114.** Aircraft **116** also may exchange information with servers **104** and **106.** Aircraft **116** may exchange data with different computers through a wireless communications link while in flight or any other type of communications link while on the ground. In these examples, server **104,** server **106,** client **110,** client **112,** and client **114** may be computers. Aircraft **116** may generate events and send those events to a computer, such as server **104.** Additionally, server **104** may process these events to determine whether additional data is needed. This determination is made using a policy. If additional data is needed from aircraft **116,** server **104** may send a request back to aircraft **116** for this additional data. These types of determinations may be made automatically to minimize the possibility that transient data located on aircraft **116** may be lost or no longer exist. According to the invention, transient data is data that may be present only temporarily within a data processing system or storage device. Network data processing system **100** may include additional servers, clients, and other devices not shown.

In the depicted example, network data processing system **100** is the Internet with network **102** representing a worldwide collection of networks and gateways that use the Transmission Control Protocol/Internet Protocol (TCP/IP) suite of protocols to communicate with one another. Of course, network data processing system **100** also may be implemented as a number of different types of networks, such as for example, an intranet, a local area network (LAN), or a wide area network (WAN). **Figure 1** is intended as an example, and not as an architectural limitation for different embodiments.

Turning now to **Figure 2****,** a diagram of a data processing system is depicted in accordance with an illustrative embodiment. Data processing system **200** is an example of a data processing system that may be used to implement servers and clients, such as server **104** and client **110.** Further, data processing system **200** is an example of a data processing system that may be found in aircraft **116** in **Figure 1****.**

In this illustrative example, data processing system **200** includes communications fabric **202,** which provides communications between processor unit **204,** memory **206,** persistent storage **208,** communications unit **210,** input/output (I/O) unit **212,** and display **214.**

Processor unit **204** serves to execute instructions for software that may be loaded into memory **206.** Processor unit **204** may be a set of one or more processors or may be a multi-processor core, depending on the particular implementation. Further, processor unit **204** may be implemented using one or more heterogeneous processor systems in which a main processor is present with secondary processors on a single chip. As another illustrative example, processor unit **204** may be a symmetric multi-processor system containing multiple processors of the same type.

Memory **206,** in these examples, may be, for example, a random access memory or any other suitable volatile or non-volatile storage device. Persistent storage **208** may take various forms depending on the particular implementation. Persistent storage **208** may contain one or more components or devices, such as, for example, a hard drive, a flash memory, a rewritable optical disk, a rewritable magnetic tape, or some combination of the above. The media used by persistent storage **208** also may be removable. For example, a removable hard drive may be used for persistent storage **208.**

Communications unit **210,** in these examples, provides for communications with other data processing systems or devices. In these examples, communications unit **210** is a network interface card. Communications unit **210** may provide communications through the use of either or both physical and wireless communications links.

Input/output unit **212** allows for input and output of data with other devices that may be connected to data processing system **200.** For example, input/output unit **212** may provide a connection for user input through a keyboard and mouse. Further, input/output unit **212** may send output to a printer. Display **214** provides a mechanism to display information to a user.

Instructions for the operating system and applications or programs are located on persistent storage **208.** These instructions may be loaded into a memory, such as memory **206,** for execution by processor unit **204.** The processes of the different embodiments may be performed by processor unit **204** using computer implemented instructions, which may be located in memory **206.** These instructions are referred to as, program code, computer usable program code, or computer readable program code that may be read and executed by a processor in processor unit **204.** The program code in the different embodiments may be embodied on different physical or tangible computer readable media, such as memory **206** or persistent storage **208.**

Program code **216** is located in a functional form on computer readable media **218** and may be loaded onto or transferred to data processing system **200** for execution by processor unit **204.** Program code **216** and computer readable media **218** form computer program product **220** in these examples. In one example, computer readable media **218** may be in a tangible form, such as, for example, an optical or magnetic disc that is inserted or placed into a drive or other device that is part of persistent storage **208** for transfer onto a storage device, such as a hard drive that is part of persistent storage **208.** In a tangible form, computer readable media **218** also may take the form of a persistent storage, such as a hard drive or a flash memory that is connected to data processing system **200.** The tangible form of computer readable media **218** is also referred to as computer recordable storage media.

Alternatively, program code **216** may be transferred to data processing system **200** from computer readable media **218** through a communications link to communications unit **210** and/or through a connection to input/output unit **212.** The communications link and/or the connection may be physical or wireless in the illustrative examples. The computer readable media also may take the form of non-tangible media, such as communications links or wireless transmissions containing the program code.

The different components illustrated for data processing system **200** are not meant to provide architectural limitations to the manner in which different embodiments may be implemented. The different illustrative embodiments may be implemented in a data processing system including components in addition to or in place of those illustrated for data processing system **200.** Other components shown in **Figure 2** can be varied from the illustrative examples shown.

For example, a bus system may be used to implement communications fabric **202** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **206** or a cache such as found in an interface and memory controller hub that may be present in communications fabric **202.**

The different advantageous embodiments recognize and take into account that although events may be selected for a vehicle to send and/or store vehicle data, this data may be insufficient to perform the desired analysis. Vehicle data is data about the vehicle and/or data gathered by a vehicle. Currently, the data that is downloaded from an aircraft may be a set of predefined reports that are generated automatically in response to an event that is detected by the aircraft data processing system.

The different advantageous embodiments recognize that additional data may be needed to perform additional analysis or to make a recommendation. The different advantageous embodiments recognize that currently, additional data may be identified and/or obtained by an operator or other user requesting the data. These types of requests, however, may not be timely. The different advantageous embodiments recognize that often times, data may be transient. In other words, the data may only last, for example, 10 minutes or a few seconds prior to that data being no longer available.

A turbulence event is a transient condition. Some data, such as flight control surface position, may be captured/saved by the onboard system and stored. However, other data, such as air conditioning pack air in-flow rates surrounding the turbulence event, may be transient and may not be saved. This transient data may be useful for analysis of an air conditioning system anomalous operation during the turbulence event and would otherwise be lost without the different advantageous embodiments.

Examples of transient data include, for example, amount of fuel present at a specific phase of a mission, fuel quantities in individual tanks at different times, engine conditions during startup, engine conditions during shutdown, electrical conditions during start up, electrical conditions during shutdown, engine parameters, and other types of data that may be transient.

As a result, even if the data is analyzed by an operator when the data is received to identify additional data that may be needed, some or all of the additional data may no longer be available after the operator determines that the additional data is needed. Further, even if the additional data were still available, this type of process is time-consuming and expensive.

In recognition and taking into account this problem, the different advantageous embodiments automatically analyze vehicle data from the aircraft data processing system. The different advantageous embodiments monitor the vehicle for events over a wireless interface. This wireless interface may include using a set of communications links. A set as used herein refers to one or more items.

For example, a set of wireless communications links is one or more wireless communications links. In response to receiving an event sent over the wireless interface by the vehicle, a determination may be made as to whether additional vehicle data is needed for the event based on a policy. A policy as used in these examples is a set of rules and/or data that may be used to make determinations as to whether additional data is needed and/or what type of data is needed.

The different advantageous embodiments recognize that relying on an operator to perform an analysis and then determine what additional data may be needed may occur over a period of time during or after which additional data is no longer available or only part of the additional data is available. Further, this type of process may be operator intensive when monitoring an entire fleet of aircraft. As a result, the different advantageous embodiments use a policy to automatically analyze an event to determine whether additional vehicle data and/or what additional vehicle data may be needed. In response to a determination that additional data is needed, the policy may be used to identify that data. A request may then be sent to the vehicle for the additional data.

By using a policy, operator interpretations as to whether data is needed and what data is needed are no longer required. Further, by using a policy, the same type of data may be obtained based on a predetermination of what data may be required for different types of events. In other words, the policy ensures a consistency in the type of additional data that is obtained. When different operators are relied on for identifying the data, different operators may select different types of data for the same events, depending on their interpretations and/or analysis.

In response to a determination that vehicle data is needed, a request is sent for the vehicle data over the wireless interface to the vehicle. In response to receiving the vehicle data over the wireless interface from the vehicle, this vehicle data may be stored. As a result, the loss of transient data may be avoided.

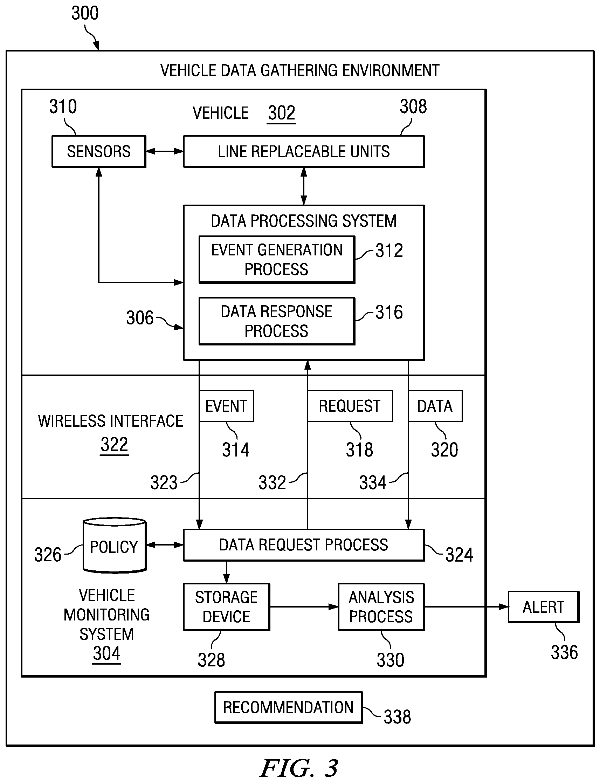

With reference now to **Figure 3****,** a diagram illustrating components used to automatically obtain data from a vehicle is depicted in accordance with an advantageous embodiment.

In this example, vehicle data gathering environment **300** may include vehicle **302** and vehicle monitoring system **304.** Vehicle **302** is an aircraft, such as aircraft **116** in **Figure 1****.** In examples not part of the invention, vehicle **302** may take other forms. For example, vehicle **302** may be, for example, without limitation, a surface ship, a car, a truck, a military ground vehicle, a personnel carrier, a submarine, a spacecraft, or some other vehicle.

Vehicle monitoring system **304** may be a data processing system such as, for example, server **104** in **Figure 1****.** Vehicle monitoring system **304** may be located at a ground station such as, for example, an airport, a maintenance facility, or some other ground location.

In this example, vehicle **302** includes data processing system **306,** line replaceable units **308** and sensors **310.** Data processing system **306** may function as a health monitoring system to monitor line replaceable units **308** and other components within vehicle **302.** These other components may be monitored using sensors **310.** This data may be obtained directly by data processing system **306** from sensors **310** or indirectly through line replaceable units **308.** Sensors **310** may include, for example, without limitation, a valve position sensor, a pressure sensor, a temperature sensor, an oxygen pressure sensor, a fuel level sensor, or some other suitable sensor in vehicle **302.**

In this example, event generation process **312** executes on data processing system **306.** Event generation process **312** may be a process that automatically generates events based on a selection of data and information that is desired for a transmission to vehicle monitoring system **304.** In these examples, event generation process **312** may generate events such as event **314.** Event **314** may take various forms. For example, event **314** may contain vehicle data or alerts. When vehicle data is included in event **314,** this vehicle data may be in raw form or placed into a report.

Data response process **316** also executes on data processing system **306.** Data response process **316** may receive requests such as, for example, request **318.** In response to receiving request **318,** data response process **316** may identify data to be collected and returned as data **320.** Data **320** may be vehicle data in these examples. This data may be collected from various components such as, for example, without limitation, sensors **310** and line replaceable units **308.**

Data processing system **306** may gather vehicle data in various forms. This vehicle data may include, for example, engine oil quantity, oxygen pressure, tire pressure, hydraulic fluid levels, fuel level, cabin temperature, outside temperature, air pressure, speed, location, and other suitable types of vehicle data.

Data processing system **306** sends event **314** to vehicle monitoring system **304** over wireless interface **322** in these examples. This event may be sent over a communications link such as communications link **323** over wireless interface **322.** In these examples, wireless interface **322** is a medium over which communications between vehicle **302** and vehicle monitoring system **304** may be made. This medium is air in these examples. Vehicle monitoring system **304** includes a number of components used to process events such as event **314.** In these examples, vehicle monitoring system **304** includes data request process **324,** policy **326,** storage device **328,** and analysis process **330.**

Data request process **324** receives event **314** and processes event **314** using policy **326.** Data request process **324** stores event **314** in storage device **328** for analysis by analysis process **330.** In some advantageous embodiments, data request process **324** may send event **314** directly to analysis process **330.**

According to the invention, policy **326** is a set of rules and/or data that may be used to identify whether additional data is required to process the event. Further, policy **326** is also used to identify the type of additional data needed.

Data request process **324** may generate request **318** and send request **318** over communications link **332** across wireless interface **322** to aircraft data processing system **306.** Request **318** is processed by data response process **316.** Request **318** may be, for example, a request for additional temperature data, register values in a line replaceable unit within line replaceable units **308,** or other suitable data. Data response process **316** collects this data using sensors **310** and/or line replaceable units **308.** Data **320** is then sent over communications link **334** through wireless interface **322** back to data request process **324.**

Also, in these advantageous embodiments, an iterative approach to data analysis may be performed. In other words, based on the data received, additional policies may be triggered to request more data. Several iterations of events, such as data requests, data transmissions, and additional data requests, may allow for enhanced automatic consistent data collection and analysis.

Data **320** may take the form of context sensitive vehicle data in these examples. Context sensitive vehicle data is any vehicle data defined using policy **326** and may be any data relating to an event. As another example, context sensitive vehicle data may be conditions relating to the event. For example, if the original event was a fault, data **320** may be additional data from sensors **310** or a related part of a system in line replaceable unit **308** containing the particular component generating the fault.

In another example, if the event is a particular phase in addition of vehicle **302,** the context sensitive vehicle data may be collected based on time. For example, if vehicle **302** is an aircraft in a descent phase, a collection of air pressure data within the aircraft may be gathered every two minutes during the descent phase. In still another example, if the vehicle is in a descent phase, fuel consumption may be collected every five minutes during the descent phase as the context sensitive vehicle data. In these examples, context sensitive vehicle data is data identified using a policy.

Data **320** is received by data request process **324** in these examples and stored in storage device **328.** As discussed above, data **320** may trigger additional policies in policy **326** to request additional data allowing for iterative data collection and analysis. Analysis process **330** may obtain data **320** from storage device **328** as well as event **314** and process the data to generate a result.

This result may be, alert **336** and recommendation **338.** Alert **336** may be generated by analysis process **330.** Alert **336** may indicate that an action should be taken. Alert **336** may identify the particular problem or fault of interest. Further, alert **336** may be sent to a maintenance operator and/or vehicle **302.** Analysis process **330** also may generate recommendation **338.** Recommendation **338** may identify maintenance operations that may be performed with respect to the particular condition.

Analysis process **330** may analyze event **314** and data **320** to determine whether a current condition needs maintenance in when this maintenance may be applied. Analysis process **330** may identify potential conditions that may require maintenance in the future as well as currently occurring conditions. As an example, analysis process **330** may perform trending and/or other statistical analyses.

In this manner, the different advantageous embodiments reduce the amount of time and effort needed to identify conditions that may require maintenance. Further, the different advantageous embodiments provide a capability to obtain data that may be lost using currently employed methods to provide a better analysis. The different advantageous embodiments also provide a capability to automatically identify vehicle data that is needed.

The illustration of vehicle data gathering environment **300** depicts one manner in which advantageous embodiments may be implemented. This illustration is not meant to imply physical or architectural limitations to the manner in which vehicle data gathering environment **300** may be implemented. For example, vehicle monitoring system **304** may be located on another vehicle instead of a ground location. In other advantageous embodiments, vehicle monitoring system **304** may monitor multiple vehicles rather than just vehicle **302.** Further, different components may be implemented in code different from the way the functional components have been illustrated. For example, event generation process **312** and data response process **316** may be implemented using a single program rather than two separate components as illustrated in **Figure 3****.**

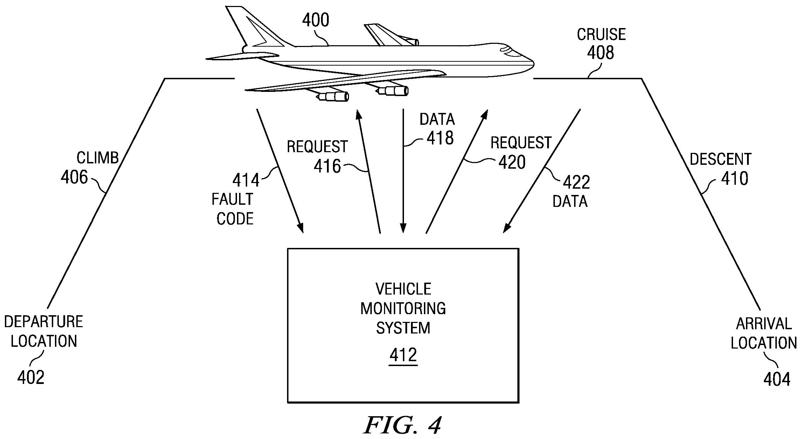

With reference now to **Figure 4****,** a diagram of data flow for requesting vehicle data is depicted in accordance with an advantageous embodiment. In this example, aircraft **400** has a number of different phases during its mission between departure location **402** and arrival location **404.**

These phases include climb **406,** cruise **408,** and descent **410.** Vehicle monitoring system **412** receives an event in the form of fault code **414** from aircraft **400** during cruise phase **408.** Vehicle monitoring system **412** is an example of a vehicle monitoring system such as, for example, vehicle monitoring system **304** in **Figure 3****.**

In response to receiving fault code **414,** vehicle monitoring system **412** identifies data that may be required. Request **416** is sent to aircraft **400.** In response to receiving request **416,** aircraft **400** generates and returns data **418** to vehicle monitoring system **412.** Data **418** also may take the form of an event that may require additional data. In this example, data **418** may be processed by vehicle monitoring system **412** to generate request **420** to aircraft **400** to request data **422** to be sent back to vehicle monitoring system **412.**

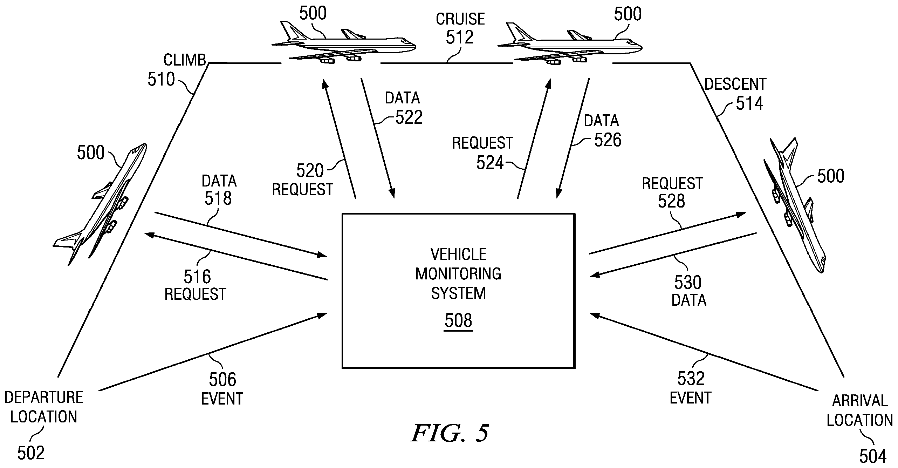

With reference now to **Figure 5****,** a diagram of data flow for requesting vehicle data is depicted in accordance with an advantageous embodiment.

In this example, aircraft **500** may depart from departure location **502** on a mission to arrival location **504.** When aircraft **500** leaves departure location **502,** aircraft **500** generates event **506,** which is received by vehicle monitoring system **508.** Vehicle monitoring system **508** may be implemented using a system such as vehicle monitoring system **304** in **Figure 3****.** Event **506** may be, for example, a departure location code or merely an indication that aircraft **500** has taken off.

Aircraft **500** may have a number of phases during its mission to arrival location **504.** These phases include climb phase **510,** cruise phase **512,** and descent phase **514.** As aircraft **500** travels during its mission, vehicle monitoring system **508** periodically sends requests to aircraft **500** for data in this illustrative example.

For example, vehicle monitoring system **508** sends request **516** after a period of time has passed, while aircraft **500** is in climb phase **510.** In response, aircraft **500** returns data **518.** After the period of time has passed again, vehicle monitoring system **508** sends request **520** to aircraft **500,** while aircraft **500** is in cruise phase **512.** In response, aircraft **500** returns data **522.** After the period of time has passed again, vehicle monitoring system **508** sends request **524** to aircraft **500** and receives data **526,** while aircraft **500** is in cruise phase **512.** After the period of time has passed again, vehicle monitoring system **508** sends request **528** to aircraft **500** and receives data **530** while aircraft **500** is in descent phase **514.**

This requesting and receiving of data ends when event **532** is received from aircraft **500** upon aircraft **500** landing at arrival location **504.** Event **532** may be, for example, an arrival airport code or simply an indication that aircraft **500** has landed.

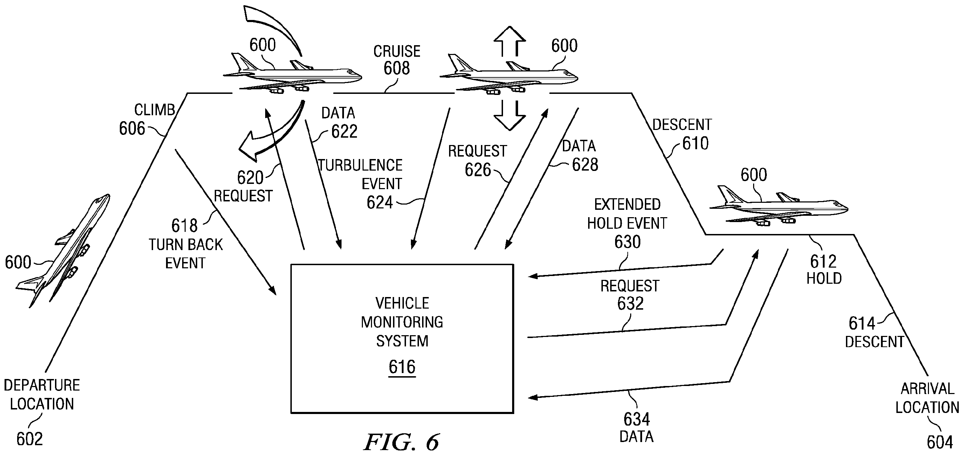

With reference now to **Figure 6****,** another example of data flow for obtaining vehicle data is depicted in accordance with an advantageous embodiment. In this example, aircraft **600** may depart from departure location **602** on a mission to arrival location **604.**

Aircraft **600** may have various phases during its mission. These phases include climb phase **606,** cruise phase **608,** descent phase **610,** hold phase **612,** and descent phase **614.** During this mission, aircraft **600** may send events and receive requests from vehicle monitoring system **616.**

In this example, aircraft **600** sends turn back event **618** to vehicle monitoring system **616.** A turn back event occurs when an aircraft makes an unplanned return to a point of origin. A turn back event may occur because of an aircraft problem, weather, or other issue. With turn back event **618,** additional information on the health of an aircraft may be used to assess the nature of the problem for resolution upon landing. In response to receiving turn back event **618** during cruise phase **608,** vehicle monitoring system **616** sends request **620** to aircraft **600.** In response to receiving request **620,** aircraft **600** returns data **622.**

Later, during the flight in cruise phase **608,** aircraft **600** sends turbulence event **624** in this example. Turbulence event **624** indicates that aircraft **600** has encountered severe turbulence. In response to receiving turbulence event **624,** vehicle monitoring system **616** sends request **626** to obtain more data relating to the turbulence.

With turbulence event **624,** data that may be requested includes, for example, accelerations, air speed changes, or other suitable parameters. This type of information may be used to determine effects on the structure and system components of an aircraft. Further, this information may be used to guide or identify inspections for the aircraft. In response to receiving request **626,** aircraft **600** returns data **628** to vehicle monitoring system **616.**

During its mission, aircraft **600** may encounter an extended hold phase during hold phase **612.** In response to this condition, aircraft **600** may send extended hold event **630** to vehicle monitoring system **616.** In response to receiving extended hold event **630,** vehicle monitoring system **616** may send request **632** to aircraft **600.**

During an extended hold, overall fuel quantity and individual fuel tank quantities are closely monitored to ensure that sufficient fuel quantities are present. Further, this information may be used to manage landings at the intended destination. Further, this information may be used to determine whether to divert the aircraft to another destination. Diversions may occur because of various factors such as, for example, weather or air traffic conditions.

In response to receiving request **632,** aircraft **600** sends data **634** back to vehicle monitoring system **616.** With this type of information, a number of different types of analyses may be made by vehicle monitoring system **616.** For example, when the information includes abrupt air speed changes during turbulence, the analysis may identify a need for airframe and/or engine inspections. The nature and extent of the inspections may be specified in aircraft maintenance documents and may depend on the aircraft configuration as well as the severity of the event.

As another example, a lightning strike may require a system check to ensure that various devices and connections have not been affected. The analysis may identify systems to be tested as well as specific tests. The tests may be identified in the analysis based on the nature and severity of the lightning strike.

In yet another example, the analysis may identify a possibility of effects on the operation and/or functionality of the system or subsystem in response to a loss of another system or subsystem functionality. The analysis may identify tests, inspections, adjustments, or other actions that may be needed to ensure proper subsequent operation or to prevent further fault events. As a specific example, a loss of hydraulic fluid may cause hydraulic pumps and/or tubing to be damaged.

In still another example, the analysis may identify fuel quantity and imbalances. These imbalances may occur with differences in the side-to-side loading of fuel. Further, the analysis also may identify water in the fuel in the information requested. As a result, the analysis may recommend changes in pilot actions during approach or landing. Further, the selection of airports also may change depending on the analysis.

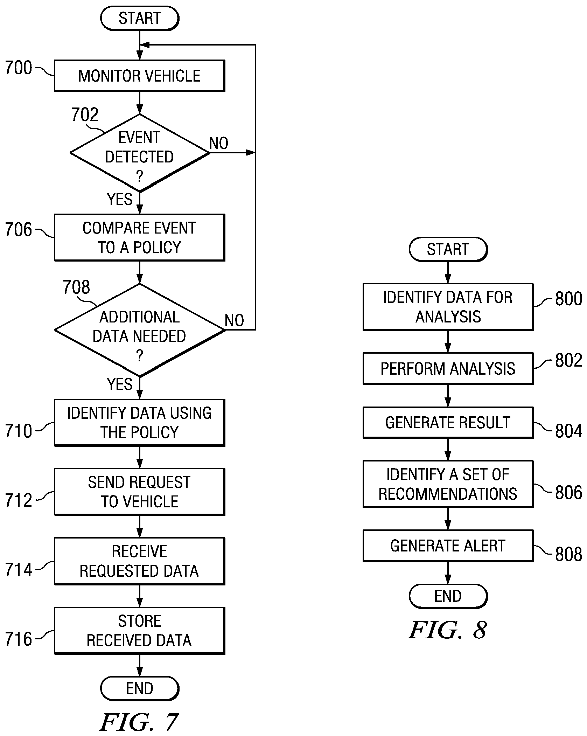

With reference now to **Figure 7****,** a flowchart of a process for obtaining vehicle data is depicted in accordance with an advantageous embodiment. The process illustrated in **Figure 7** may be implemented in a software component such as, for example, data request process **324** in vehicle monitoring system **304** in **Figure 3****.**

The process begins by monitoring a vehicle (operation **700**). Operation **700** may involve monitoring a wireless interface for transmissions from a vehicle. In other advantageous embodiments, operation **700** may include monitoring a timer set for a vehicle. This timer may be used to generate periodic events to request vehicle data. The process then determines whether an event has been detected (operation **702**). This event may be, for example, an event generated by the vehicle and sent to the process. In other advantageous embodiments, the event may be the expiration of the timer.

In response to detecting the event, the event is compared to a policy (operation **706**). The policy is used to provide a capability to automatically determine whether additional vehicle data is needed without user intervention. Further, the use of the policy also helps ensure that the requested data is consistent for a particular type of event. As a result, an analysis of similar events from different vehicles may be analyzed with each other or compared to each other. A determination is then made as to whether additional vehicle data is needed (operation **708**). This determination may be made using the comparison made to the policy. If additional vehicle data is needed, the vehicle data is identified using the policy (operation **710**).

The process then sends a request to the vehicle for data identified using the policy (operation **712**). The requested data is then received (operation **714**). This received data is stored (operation **716**) with the process terminating thereafter.

With reference now to **Figure 8**, a flowchart of a process for analyzing vehicle data is depicted in accordance with an advantageous embodiment. The process illustrated in **Figure 8** may be implemented in a component such as, for example, analysis process **330** in vehicle monitoring system **304** in **Figure 3****.**

The process begins by identifying the vehicle data for analysis (operation **800**). In these examples, this data may include a set of events and a set of additional vehicle data that may have been requested. The process then performs an analysis on identified data (operation **802**). This analysis may be performed using any currently available analysis process.

Examples of different types of analysis processes may include comparing current engine setting, fuel flow, speed, and altitude data to similar data for idealized flight testing. This comparison may be used to identify changes in aircraft and engine performance. Another example of analysis that may be performed includes comparing tire pressures between different tires on the aircraft. Side-to-side differences between tire pressures may be identified that could induce control problems on landing. Changes in hydraulic fuel levels may be analyzed to identify potential leakage issues.

As another example, change in engine oil may be assessed to identify potential leakage or oil consumption issues. In yet another example, changes in electrical system parameters and trends during auxiliary power unit starting may be used to determine the state of batteries in the aircraft.

The process then generates a result from the analysis (operation **804**). The results in operation **804** may be a set of fault conditions. A fault condition is an identification of a fault or potential fault. The fault may be any failure of a component, part, system, subsystem, or other object needed for a vehicle to operate properly and/or as expected.

Thereafter, a set of recommendations are identified (operation **806**). These recommendations may include recommendations from maintenance operations, that actions are to be taken, or even that no actions are needed. The process then may generate an alert (operation **808**) with the process terminating thereafter. In this example, alert **808** may be an optional step that is implemented depending on the priority of the recommendation. For example, some recommendations may require actions to be taken after the mission for the vehicle has terminated while other recommendations may require immediate actions.

Thus, the different advantageous embodiments provide a computer implemented method, apparatus, and computer usable program code for obtaining and managing vehicle data. The different advantageous embodiments provide a capability to select additional data including transient data in addition to predefined data that may be sent by an aircraft during its mission. The identification of the mission data is performed using a policy rather than user input. In this manner, a more consistent type of data may be obtained.

The flowcharts and block diagrams in the different depicted embodiments illustrate the architecture, functionality, and operation of some possible implementations of apparatus, methods and computer program products. In this regard, each block in the flowchart or block diagrams may represent a module, segment, or portion of computer usable or readable program code, which comprises one or more executable instructions for implementing the specified function or functions.

In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

The different advantageous embodiments can take the form of an entirely hardware embodiment, an entirely software embodiment, or an embodiment containing both hardware and software elements. Some embodiments are implemented in software, which includes but is not limited to forms, such as, for example, firmware, resident software, and microcode.

Furthermore, the different embodiments can take the form of a computer program product accessible from a computer usable or computer readable medium providing program code for use by or in connection with a computer or any device or system that executes instructions. For the purposes of this disclosure, a computer usable or computer readable medium can generally be any tangible apparatus that can contain, store, communicate, propagate, or transport the program for use by or in connection with the instruction execution system, apparatus, or device.

The computer usable or computer readable medium can be, for example, without limitation an electronic, magnetic, optical, electromagnetic, infrared, or semiconductor system, or a propagation medium. Non limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W) and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation to keyboards, touch screen displays, and pointing devices. Different communications adapters may also be coupled to the system to enable the data processing system to become coupled to other data processing systems or remote printers or storage devices through intervening private or public networks. Non-limiting examples are modems and network adapters are just a few of the currently available types of communications adapters.

## Claims

1. A computer implemented method performed by a vehicle monitoring system for automatically obtaining vehicle data, wherein the vehicle is an aircraft, the computer implemented method comprising:
monitoring the aircraft for events over a wireless interface;
responsive to receiving an event sent by the aircraft over the wireless interface when the aircraft is in flight, automatically determining whether additional vehicle data is needed for the event based on a policy; wherein the additional vehicle data comprises transient data that is present only temporarily within a data processing system or a storage device of the aircraft, and wherein the policy includes at least a set of rules or data used to identify whether the additional vehicle data is required to process the event, the policy identifying the type of additional vehicle data;
responsive to a determination that additional vehicle data is needed, sending a request for the additional vehicle data including transient data over the wireless interface to the aircraft; and
responsive to receiving the additional vehicle data over the wireless interface from the aircraft, storing the additional vehicle data including transient data; further comprising:
analyzing the additional vehicle data stored after receiving the additional vehicle data from the aircraft in flight to form an analysis;
identifying a set of fault conditions using the analysis while the aircraft is in flight;
generating an alert and a set of recommendations in response to identifying the set of fault conditions, wherein the alert identifies the fault condition and the recommendation identifies maintenance operations with respect to the fault condition;
sending the alert identifying the fault conditions to a maintenance operator for performing maintenance on the aircraft.

2. The computer implemented method of claim 1, wherein the analyzing step comprises:
performing a root cause analysis using the additional vehicle data.

3. The computer implemented method of claim 1, wherein the set of fault conditions includes an identification of a potential future failure.

4. The computer implemented method of claim 1, further comprising:
generating a set of maintenance actions prior to the aircraft completing a mission for the aircraft.

5. A vehicle monitoring system for automatically obtaining vehicle data, wherein the vehicle is an aircraft, the system comprising:
processing means,
storage means, and
a wireless interface,
wherein the vehicle monitoring system is configured to carry out the method of any one of claims 1-4.

6. The vehicle monitoring system of claim 5, wherein the additional vehicle data comprises context sensitive vehicle data, defined using the policy, for the event.

7. A computer program product for automatically obtaining vehicle data, the computer program product comprising a computer recordable storage medium having computer executable instructions adapted, when executed on a processor device, to cause the device to carry out the method of any one of claims 1-4.

## Patentansprüche

1. Computerimplementiertes Verfahren, das von einem Fahrzeugüberwachungssystem zum automatischen Erhalten von Fahrzeugdaten durchgeführt wird, wobei das Fahrzeug ein Flugzeug ist, wobei das computerimplementierte Verfahren aufweist:
Überwachen des Flugzeugs hinsichtlich Ereignissen über eine drahtlose Schnittstelle;
im Ansprechen auf das Empfangen eines von dem Flugzeug über die drahtlose Schnittstelle gesendeten Ereignisses während des Flugs des Flugzeugs, automatisches Ermitteln, ob zusätzliche Fahrzeugdaten für das Ereignis basierend auf einer Richtlinie erforderlich sind; wobei die zusätzlichen Fahrzeugdaten vorübergehende Daten aufweisen, die nur temporär in einem Datenverarbeitungssystem oder einer Speichervorrichtung des Flugzeugs vorhanden sind, und wobei die Richtlinie wenigstens einen Satz von Regeln oder Daten aufweist, die verwendet werden um zu identifizieren, ob die zusätzlichen Fahrzeugdaten erforderlich sind, um das Ereignis zu bearbeiten, wobei die Richtlinie den Typ zusätzlicher Fahrzeugdaten identifiziert;
im Ansprechen auf das Ermitteln, dass zusätzliche Fahrzeugdaten erforderlich sind, Senden einer Anfrage nach den zusätzlichen Fahrzeugdaten einschließlich vorübergehender Daten über die drahtlose Schnittstelle an das Flugzeug; und
im Ansprechen auf das Empfangen der zusätzlichen Fahrzeugdaten über die drahtlose Schnittstelle von dem Flugzeug, Speichern der zusätzlichen Fahrzeugdaten einschließlich vorübergehender Daten; weiter aufweisend:
Analysieren der zusätzlichen Fahrzeugdaten, die nach dem Empfangen der zusätzlichen Fahrzeugdaten von dem Flugzeug im Flug gespeichert wurden, um eine Analyse zu erstellen;
Identifizieren eines Satzes von Fehlerzuständen unter Verwendung der Analyse, während sich das Flugzeug im Flug befindet;
Erzeugen einer Warnung und eines Satzes von Empfehlungen im Ansprechen auf das Identifizieren des Satzes von Fehlerzuständen, wobei die Warnung den Fehlerzustand identifiziert und die Empfehlung Wartungsoperationen hinsichtlich des Fehlerzustands identifiziert;
Senden der Warnung, die die Fehlerzustände identifiziert, an einen Wartungsoperator, um Wartung für das Flugzeug durchzuführen.

2. Computerimplementiertes Verfahren nach Anspruch 1, wobei der Schritt des Analysierens aufweist:
Durchführen einer Fehler-Ursachen-Analyse unter Verwendung der zusätzlichen Fahrzeugdaten.

3. Computerimplementiertes Verfahren nach Anspruch 1, wobei der Satz von Fehlerzuständen eine Identifizierung eines möglichen zukünftigen Fehlers aufweist.

4. Computerimplementiertes Verfahren nach Anspruch 1, das des Weiteren aufweist:
Erzeugen eines Satzes von Wartungsaktionen, bevor das Flugzeug einen Flug beendet.

5. Fahrzeugüberwachungssystem zum automatischen Erhalten von Fahrzeugdaten, wobei das Fahrzeug ein Flugzeug ist, wobei das System aufweist:
Verarbeitungsmittel,
Speichermittel, und
eine drahtlose Schnittstelle,
wobei das Fahrzeugüberwachungssystem dazu konfiguriert ist, das Verfahren nach einem der Ansprüche 1-4 durchzuführen.

6. Fahrzeugüberwachungssystem nach Anspruch 5, wobei die zusätzlichen Fahrzeugdaten kontextspezifische Fahrzeugdaten für das Ereignis aufweisen, die unter Verwendung der Richtlinie definiert sind.

7. Computerprogrammerzeugnis zum automatischen Erhalten von Fahrzeugdaten, wobei das Computerprogrammerzeugnis ein computeraufzeichenbares Speichermedium aufweist, das computerausführbare Befehle hat, die dazu ausgelegt sind, wenn sie auf einer Prozessorvorrichtung ausgeführt werden, zu veranlassen, dass die Vorrichtung das Verfahren nach einem der Ansprüche 1-4 durchführt.

## Revendications

1. Procédé mis en œuvre par ordinateur exécuté par un système de surveillance de véhicule pour obtenir automatiquement des données de véhicule, dans lequel le véhicule est un aéronef, le procédé implémenté par ordinateur comprenant les étapes consistant à :
surveiller l'aéronef concernant des événements sur une interface sans fil ;
en réponse à la réception d'un événement envoyé par l'aéronef sur l'interface sans fil lorsque l'aéronef est en vol, déterminer automatiquement si des données de véhicule supplémentaires sont nécessaires pour l'événement sur la base d'une politique ; dans lequel les données de véhicule supplémentaires comprennent des données transitoires qui ne sont présentes que temporairement dans un système de traitement de données ou un dispositif de stockage de l'aéronef, et dans lequel la politique inclut au moins un ensemble de règles ou de données utilisées pour identifier si les données de véhicule supplémentaires sont nécessaires pour traiter l'événement, la politique identifiant le type de données de véhicule supplémentaires ;
en réponse à une détermination que des données de véhicule supplémentaires sont nécessaires, envoyer une demande pour les données de véhicule supplémentaires, y compris des données transitoires sur l'interface sans fil à l'aéronef ; et
en réponse à une réception des données de véhicule supplémentaires sur l'interface sans fil à partir de l'aéronef, stocker les données de véhicule supplémentaires, y compris des données transitoires ; comprenant en outre les étapes consistant à :
analyser les données de véhicule supplémentaires stockées après avoir reçu les données de véhicule supplémentaires à partir de l'aéronef en vol pour former une analyse ;
identifier un ensemble de conditions de panne à l'aide de l'analyse pendant que l'aéronef est en vol ;
générer une alerte et un ensemble de recommandations en réponse à une identification de l'ensemble de conditions de panne, dans lequel l'alerte identifie la condition de défaut et la recommandation identifie des opérations de maintenance par rapport à la condition de panne ;
envoyer l'alerte identifiant les conditions de panne à un opérateur de maintenance pour effectuer une maintenance sur l'aéronef.

2. Procédé mis en œuvre par ordinateur selon la revendication 1, dans lequel l'étape d'analyse comprend l'étape consistant à :
effectuer une analyse de cause principale en utilisant les données de véhicule supplémentaires.

3. Procédé mis en œuvre par ordinateur selon la revendication 1, dans lequel l'ensemble de conditions de panne comprend une identification d'une panne future potentielle.

4. Procédé mis en œuvre par ordinateur selon la revendication 1, comprenant en outre l'étape consistant à :
générer un ensemble d'actions de maintenance avant que l'aéronef achève une mission de l'aéronef.

5. Système de surveillance de véhicule pour obtenir automatiquement des données de véhicule, dans lequel le véhicule est un aéronef, le système comprenant :
des moyens de traitement,
des moyens de stockage, et
une interface sans fil,
dans lequel le système de surveillance de véhicule est configuré pour exécuter le procédé selon l'une quelconque des revendications 1 à 4.

6. Système de surveillance de véhicule selon la revendication 5, dans lequel les données de véhicule supplémentaires comprennent des données de véhicule sensibles au contexte, définies en utilisant la politique, pour l'événement.

7. Produit de programme informatique pour obtenir automatiquement des données de véhicule, le produit de programme informatique comprenant un support de stockage enregistrable par ordinateur ayant des instructions exécutables par ordinateur adaptées, lorsqu'elles sont exécutées sur un dispositif processeur, pour amener le dispositif à exécuter le procédé selon l'une quelconque des revendications 1 à 4.
